# EUROPÄISCHE PATENTSCHRIFT

(11) **EP 1 891 421 B1**
(45) Veröffentlichungstag und Bekanntmachung des Hinweises auf die Patenterteilung: **22.07.2009**
(21) Anmeldenummer: 06753751.4
(22) Anmeldetag: 19.05.2006
(51) Int. Cl.: G01N 23/225

(54) **SEKUNDÄRIONEN-MASSENSPEKTROSKOPIE (SIMS) MIT POLYATOMAREM PRIMÄRIONENSTRAHL, DER AUF EINE MIT CAESIUM BESCHICHTETE OBERFLÄCHE GERICHTET WIRD**
SECONDARY ION MASS SPECTROSCOPY (SIMS) WITH POLYATOMIC PRIMARY ION BEAM, WHICH IS DIRECTED AT A SURFACE COATED WITH CAESIUM
SPECTROSCOPIE DE MASSE D'IONS SECONDAIRES (SIMS) FAISANT INTERVENIR UN FAISCEAU D'IONS PRIMAIRES POLYATOMIQUES, QUI EST DIRIGE SUR UNE SURFACE REVETUE DE CESIUM

(30) Priorität: 16.06.2005 DE 102005027937
(43) Veröffentlichungstag der Anmeldung: 27.02.2008
(73) Patentinhaber: ION-TOF Technologies GmbH, 48149 Münster (DE)
(72) Erfinder: NIEHUIS, Ewald, 48308 Senden (DE); KERSTING, Reinhard, 48155 Münster (DE); MÖLLERS, Rudolf, 48329 Havixbeck (DE); GREHL, Thomas, 48149 Münster (DE)
(74) Vertreter: Pfenning, Meinig & Partner GbR
(86) Internationale Anmeldenummer: PCT/EP2006/004782
(87) Internationale Veröffentlichungsnummer: WO 2006/133786

(56) Entgegenhaltungen:
- WO-A-20/04038395
- MELNIK V ET AL: "Influence of N2/H2 plasma treatment on chemical vapor deposited TiN multilayer structures for advanced CMOS technologies" MATERIALS SCIENCE AND ENGINEERING B, ELSEVIER SEQUOIA, LAUSANNE, CH, Bd. 102, Nr. 1-3, 15. September 2003 (2003-09-15), Seiten 358-361, XP004450760 ISSN: 0921-5107
- GILLEN GREG ET AL: "Negative cesium sputter ion source for generating cluster primary ion beams for secondary ion mass spectrometry analysis" JOURNAL OF VACUUM SCIENCE AND TECHNOLOGY A. VACUUM, SURFACES AND FILMS, AMERICAN INSTITUTE OF PHYSICS, NEW YORK, NY, US, Bd. 19, Nr. 2, März 2001 (2001-03), Seiten 568-575, XP012005502 ISSN: 0734-2101
- TOUBOUL D ET AL: "TISSUE MOLECULAR ION IMAGING BY GOLD CLUSTER ION BOMBARDMENT" ANALYTICAL CHEMISTRY, AMERICAN CHEMICAL SOCIETY. COLUMBUS, US, Bd. 76, Nr. 6, 15. März 2004 (2004-03-15), Seiten 1550-1559, XP001196642 ISSN: 0003-2700
- GAO Y.: "A new secondary ion mass spectrometry technique for III-V semiconductor compounds using the molecular ions CsM+" JOURNAL OF APPLIED PHYSICS, Bd. 64, Nr. 7, 1. Oktober 1988 (1988-10-01), Seiten 3760-3762, XP002399102 in der Anmeldung erwähnt

## Beschreibung

Die vorliegende Erfindung betrifft ein Verfahren zur Analyse einer Festkörperprobe. Derartige Verfahren werden insbesondere zur Analyse der Materialzusammensetzung und -verteilung in bzw. auf einer Festkörperoberfläche eingesetzt. Sie werden ebenso verwendet, um eine Tiefenverteilung der stofflichen Zusammensetzung eines Festkörpers zu bestimmen (Tiefenprofil).

Als geeignete Verfahren zur Analyse von Festkörperoberflächen haben sich verschiedene Verfahren der Sekundärionenmassenspektrometrie (SIMS) etabliert. Hierbei wird die zu analysierende Probenoberfläche mit einem Ionenstrahl beschossen. Dieser Primärionenstrahl erzeugt aufgrund der in der Oberfläche der Probe ablaufenden Stoßkaskade sog. Sekundärteilchen, die aus der Oberfläche herausgeschlagen werden (Sputterprozess). Dabei werden jedoch nicht nur neutrale Sekundärteilchen erzeugt, sondern auch positiv oder negativ geladene Sekundärionen. Die Sekundärionen werden dann anschließend bezüglich ihres Verhältnisses aus Masse und Ladung analysiert. Hierzu werden bei der Sekundärionenmassenspektrometrie überwiegend magnetische Sektorfeldgeräte, Quadrupolmassenspektrometer oder auch Flugzeitmassenspektrometer eingesetzt. Die Analyse der erzeugten Sekundärionen kann also auf verschiedene Weise erfolgen, ohne dass das eigentliche Prinzip der Sekundärionenmassenspektrometrie hiervon betroffen wäre.

Zur Erzeugung des Primärionenstrahls stehen unterschiedliche Ionenquellen zur Verfügung. Traditionellerweise werden Gallium-, Cäsium- oder Sauerstoffionenquellen verwendet.
In neuerer Zeit werden auch sog. Clusterionenquellen eingesetzt, die beispielsweise Goldclusterionen oder Wismutclusterionen erzeugen. Eine solche Clusterionenquelle wurde von der Anmelderin der vorliegenden Anmeldung in der DE 103 39 346 A1 bzw. der Offenlegungsschrift der PCT/EP 2004/007154 dargestellt und offengelegt. Die dort beschriebenen Flüssigmetall-Clusterionenquellen werden vollumfänglich in die Offenbarung der vorliegenden Anmeldung aufgenommen. Weiterhin sind aus der Literatur bereits C60-Moleküle als Clusterionen zur Erzeugung von Sekundärionen bekannt.

Diese Clusterionenquellen werden bisher im SIMS-Verfahren verwendet, um bei organischen Probenoberflächen molekulare Sekundärionen mit hoher Ausbeute zu erzeugen.

Das eigentliche SIMS-Verfahren zur Analyse von Festkörperzusammensetzungen leidet jedoch unter dem sog. Matrixeffekt. Darunter wird verstanden, dass die Sekundärionenausbeute sehr stark von der chemischen Zusammensetzung der Probe abhängt, sodass im allgemeinen kein direkter Zusammenhang zwischen Signalintensität und Konzentration eines Elementes M in der Probe besteht. Das herkömmliche SIMS-Verfahren eignet sich daher nicht zur präzisen quantitativen Analyse einer Probe unbekannter Zusammensetzung. Zur Quantifizierung sind Standards mit sehr ähnlicher chemischer Zusammensetzung erforderlich.

Gao, Journal of Applied Physics 64 (7), 1988, S. 3760 bis 3762 stellt daher eine Alternative hierzu vor. Bei diesem Verfahren wird die Probenoberfläche mit Cäsium-Ionen gesputtert, wodurch auf der Probenoberfläche eine Cäsiumbedeckung entsteht. Beim Beschuss einer solchen Oberfläche mit dem Primärionenstrahl, herkömmlicherweise aus einer Galliumionenquelle oder im Einstrahlverfahren auch mit der Caesiumquelle, werden nun nicht die unmittelbar erzeugten atomaren Sekundärionen der Festkörperatome M erfasst, sondern die emittierten positiv geladenen Cäsiumverbindungen dieser Atome CsM⁺ oder Cs₂M⁺ (Cäsiumclusterionen) . Erstaunlicherweise hat sich dabei ergeben, dass die Signalintensität der Cäsiumclusterionen in deutlich geringerem Maße von der chemischen Umgebung der Matrix abhängt wie beim herkömmlichen SIMS-Verfahren. Der Matrixeffekt ist also in seiner Bedeutung stark zurückgedrängt. Dieser Effekt des Sputterns mit Cs-Ionen als Primärstrahl, der durch die Belegung der Oberfläche der Probe mit Cäsium-Atomen bzw. -Ionen bedingt wird, kann bis heute nicht grundlegend erklärt werden. Die gängigste Erklärung, die jedoch durchaus umstritten ist, findet sich bei Magee et al., International Journal of Mass Spectrometry and Ion Processes, 103 (1999), S. 45 bis 56. Demnach erfolgt beim Sputtern einer mit Cäsium bedeckten Oberfläche eine Rekombination von sekundären Neutralteilchen aus der Matrix mit emittierten Cäsiumsekundärionen unmittelbar oberhalb der Probenoberfläche. Die so erzeugten Cäsiumclusterionen werden dann analysiert. Die diesem sogenannten MCs-Verfahren zugrundeliegenden physikalisch-chemischen Mechanismen wären demnach fundamental von den herkömmlichen SIMS-Verfahren unterschieden.

Ferner beschreibt Melnik V. et al, Materials Science and Engineering B, "Influence of N2/H2 plasma treatment on chemical vapor deposited TiN multilayer structures for advanced CMOS technologies", 15. September 2003, Bd. 102, Nr. 1-3, Seiten 358-361, ein Verfahren gemäß Oberbegriff des Anspruchs 1.

Zusammenfassend lässt sich sagen, dass der Mechanismus und die Wirkung des MCs-Verfahrens noch nicht verstanden wird.

Die vorliegende Erfindung macht es sich nun zur Aufgabe, ein Verfahren anzugeben, mit dem unter weitgehender Verringerung des Matrixeffektes eine sehr hohe Empfindlichkeit eines sekundärionenmassenspektrometrischen Verfahrens erzielt werden kann.

Diese Aufgabe wird durch das Verfahren nach Anspruch 1 gelöst. Vorteilhafte Weiterbildungen des erfindungsgemäßen Verfahrens werden in den abhängigen Ansprüchen gegeben.

Bei dem erfindungsgemäßen Verfahren wird nun die zu analysierende Oberfläche mit Caesiumatomen bedeckt. Dies kann auch lediglich in einzelnen Bereichen der Oberfläche bzw. nur teilweise, d.h. ohne geschlossene Caesiumschicht erfolgen.

Erfindungsgemäß wird dann ein Primärionen-Analysestrahl eingesetzt, der überwiegend sog. Clusterionen enthält. Als Clusterionen werden hier sämtliche Ionen bezeichnet, die mindestens drei oder mehr Atome pro Ion aufweisen. Als solche Clusterionen können beispielsweise Bi₃⁺-, C60- oder SF₅⁺-Ionen eingesetzt werden.

Völlig überraschend hat sich nun herausgestellt, dass der Einsatz eines Cluster-Ionenstrahls beim MCs-Verfahren zu einer dramatischen Verbesserung der Empfindlichkeit, d.h. der Ionenausbeute, führt. Dieser Effekt war nicht zu erwarten, da nach dem oben beschriebenen gängigen Modell die Ionenerzeugungsmechanismen beim herkömmlichen SIMS-Verfahren und beim MCs-Verfahren fundamental unterschiedlich sind. Während beim SIMS-Verfahren im eigentlichen Sinne es entscheidend auf die Stoß- und Ionisationsverhältnisse innerhalb der oberen Probenschichten ankommt, ist demnach für die Erzeugung von Sekundärionen beim MCs-Verfahren der Prozess der Rekombination oberhalb der Oberfläche entscheidend.

Der Fachmann konnte daher nicht davon ausgehen, dass der Einsatz einer Clusterionenquelle beim MCs-Verfahren solch dramatische Verbesserungen der Empfindlichkeit bewirken würde.

Zur Bedeckung der zu analysierenden Oberfläche mit Caesium wird in einer Variante neben dem Analyseionenstrahl ein Sputterionenstrahl eingesetzt (Zweistrahlverfahren). Als Sputterionenstrahl wird ein Ionenstrahl mit Cäsiumionen verwendet, mit dem die Oberfläche der zu analysierenden Probe mit Cäsium belegt werden kann. Dieser Strahl kann zusätzlich auch bei der Tiefenprofilanalyse verwendet werden, um einen Abtrag der Oberfläche zu erzielen.

Alternativ kann die Bedeckung mit Cäsium auch durch eine Cäsiumbedampfung der Probe erfolgen.

Die Bedeckung der zu analysierenden Oberfläche mit Caesium mittels eines Cs-Sputterstrahls oder Bedampfung mit Cs kann vor, während und/oder intermittierend mit der Beaufschlagung der Oberfläche mit dem, gegebenenfalls gepulsten, Analysestrahl erfolgen.

Auf diese Weise kann die Analysefunktion des Primärionenstrahls von der Cäsiumbelegung durch Sputtern mit einem Cäsiumstrahl oder durch Bedampfung mit Cäsium getrennt werden.

Die vorliegende Erfindung eignet sich nun für eine Vielzahl von Analysetechniken und -geräten, beispielsweise für magnetische Sektorfeldgeräte, Quadrupolmassenspektrometer oder auch Flugzeitmassenspektrometer. Sie eignet sich insbesondere dafür, die vergleichsweise geringe Empfindlichkeit bei der Analyse anorganischer Festkörper mit dem MCs-Verfahren durch die erfindungsgemäße Verwendung einer Cluster-Primärionenquelle deutlich zu steigern. Es ergeben sich Ausbeutesteigerungen, beispielsweise von Ga⁺ zu Bi₃⁺ oder C₆₀⁺ bis zu einem Faktor von 100 und mehr. Diese Ausbeutesteigerung verbessert die Nachweisgrenzen in der Sekundärionenmassenspektrometrie um mehr als eine Größenordnung. Dies gilt auch für die Aufnahme von Tiefenprofilen.

Bedenkt man, welche Anstrengungen durchgeführt werden, um die Empfindlichkeit von analytischen Messgeräten auch nur um wenige % zu steigern, so ist erkennbar, dass sich mittels der vorgeschlagenen Erfindung für die Sekundärionenmassenspektrometrie vollkommen neue Anwendungsfelder eröffnen.

Im folgenden werden nun einige Beispiele für das erfindungsgemäße Verfahren beschrieben.

Es zeigen
- Figur 1: den Aufbau eines Flugzeitmassenspektrome- ters (TOF-SIMS);
- Figur 2: Ausbeuten von MCs- und MCs₂-Clusterionen bei Beschuss von verschiedenen Festkörper- proben (Aluminium, Silizium, Galliumarse- nid) mit Ga⁺, Bi₁⁺, Bi₃⁺ und C₆₀⁺ nach Sput- tern mit Cäsium, normiert auf die Ausbeute für Ga⁺;
- Figur 3: Tiefenprofile einer Arsenimplantation in silizium, gemessen mittels der in Figur 1 dargestellten apparativen Konfiguration un- ter Verwendung von Ga⁺, Bi₁⁺, Bi₃⁺ und C₆₀⁺ als Analyseionen; und
- Figur 4: Tiefenprofile einer Stickstoffverteilung in einer Siliziumdioxidprobe, gemessen mittels der in Figur 1 dargestellten apparativen Konfiguration unter Verwendung von Ga⁺, Bi₁⁺, Bi₃⁺ und C₆₀⁺ als Analyseionen.

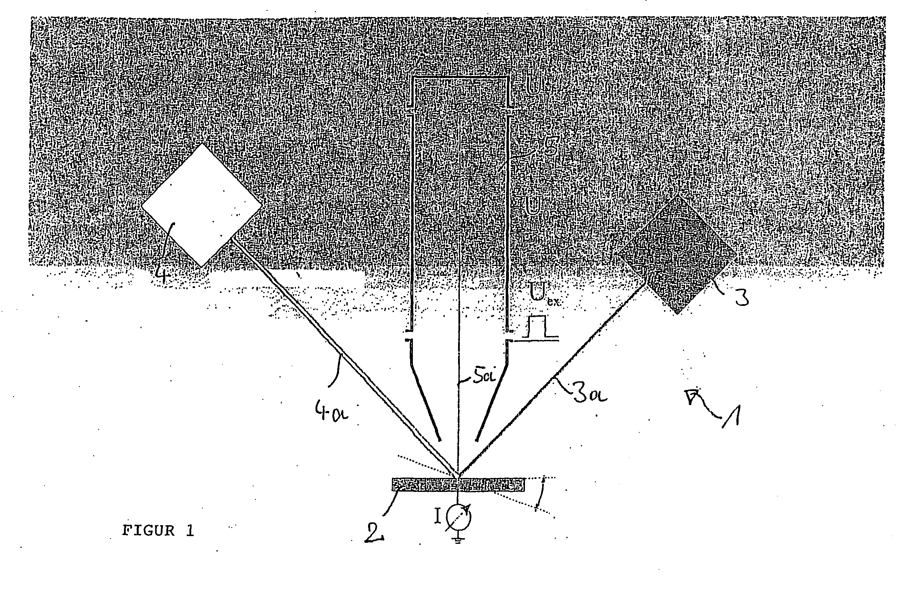

Figur 1 zeigt ein Flugzeitmassenspektrometer 1 mit einer Probe 2. Eine Primärionenquelle 3 richtet einen Primärionenstrahl 3a, der weit überwiegend Clusterionen enthält, auf die Oberfläche der Probe 2. Weiterhin richtet eine Sputterionenquelle 4 einen Strahl 4a aus Cäsiumionen auf denselben Punkt auf der Oberfläche der Probe 2. Der Cäsiumstrahl 4a belegt nun die Oberfläche der Probe 2 mit Cäsiumatomen/ -ionen und führt weiterhin zu einem Absputtern der Oberfläche der Probe 2. Der Analyseionenstrahl 3a, der in Flugzeitspektrometern gepulst ist, erzeugt innerhalb der Oberfläche 2 eine Stoßkaskade und schlägt Neutralteilchen und Ionen aus der Oberfläche der Probe 2 heraus. Gemäß dem oben beschriebenen Modell von Magee kombinieren nun die Neutralteilchen zumindest teilweise oberhalb der Oberfläche der Probe 2 mit Cäsiumionen, die durch den Strahl 3a ebenfalls im Bereich der Oberfläche der Probe 2 erzeugt werden. Die so zwischen den Probenatomen M und den Cäsiumionen entstandenen MCs⁺ oder MCs₂⁺-Moleküle werden nun einer Flugzeitanalyse, wie sie aus herkömmlichen Flugzeitmassenspektrometern bekannt ist, unterzogen und analysiert.

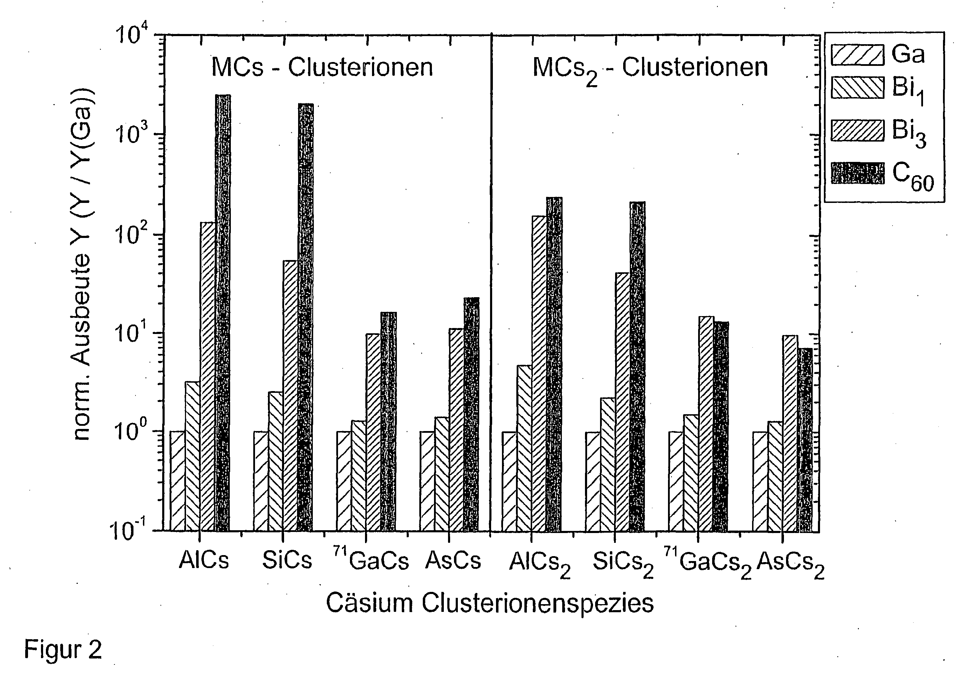

Figur 2 zeigt das Ergebnis einer Analyse von drei verschiedenen Festkörperproben Aluminium (M=Al), Silizium (M=Si) und Galliumarsenid (M=Ga und M=As). Die Proben wurden jeweils mit einem Cäsiumionenstrahl mit einer Energie von 500 eV auf einer Fläche von 300 x 300 µm² gesputtert, bis sich eine konstante Bedeckung mit Cäsium einstellte. Die mit Cäsium bedeckten Festkörperproben wurden dann im Zentrum des Sputterkraters mit einem Analysestrahl aus Ga⁺, Bi₁⁺, Bi₃⁺ mit einer Energie von 25 keV und C₆₀⁺ mit einer Energie von 10 keV analysiert. Als Massenspektrometer wurde ein Flugzeitmassenspektromer TOF.SIMS 5 der ION-TOF GmbH eingesetzt. Es wurde jeweils die Anzahl der MCs⁺-Sekundärionen (AlCs, SiCs, GaCs, AsCs) und MCs₂⁺-Sekundärionen (AlCs₂, SiCs₂, GaCs₂, AsCs₂) und die Anzahl der Primärionen (Ga⁺, Bi₁⁺, Bi₃⁺, C₆₀⁺) bestimmt. Aus dem Verhältnis der Anzahl der Sekundärionen dividiert durch die Anzahl der Primärionen ergibt sich jeweils die Ausbeute Y für die verschiedenen Sekundärionenspezies MCs⁺ und MCs₂⁺. Die Ausbeuten für die Primärionen Ga⁺, Bi₁⁺, Bi₃⁺ und C₆₀⁺ wurden jeweils auf die Ausbeuten mit Ga⁺ normiert (normierte Ausbeute Y/Y(Ga)). Das Balkendiagramm zeigt, dass bei Verwendung atomarer Primärionen mit sehr unterschiedlicher Masse wie Ga⁺ (m=69 u) und Bi₁⁺ (m=209 u) die Ausbeuten an MCs⁺-Clusterionen und MCs₂⁺-Clusterionen sich nur geringfügig unterscheiden. Wird dagegen ein Analysestrahl aus Clusterionen wie Bi₃⁺ und C₆₀⁺ eingesetzt, so werden Ausbeutesteigerungen bis zu einem Faktor 100 und mehr erreicht (man beachte die logarithmische Skala der normierten Ausbeute Y/Y(Ga)). Durch diese dramatische Steigerung der Ausbeuten durch die Verwendung von Cluster-Primärionenquellen lassen sich nun Festkörperproben mit erheblich höherer Empfindlichkeit und niedrigeren Nachweisgrenzen analysieren.

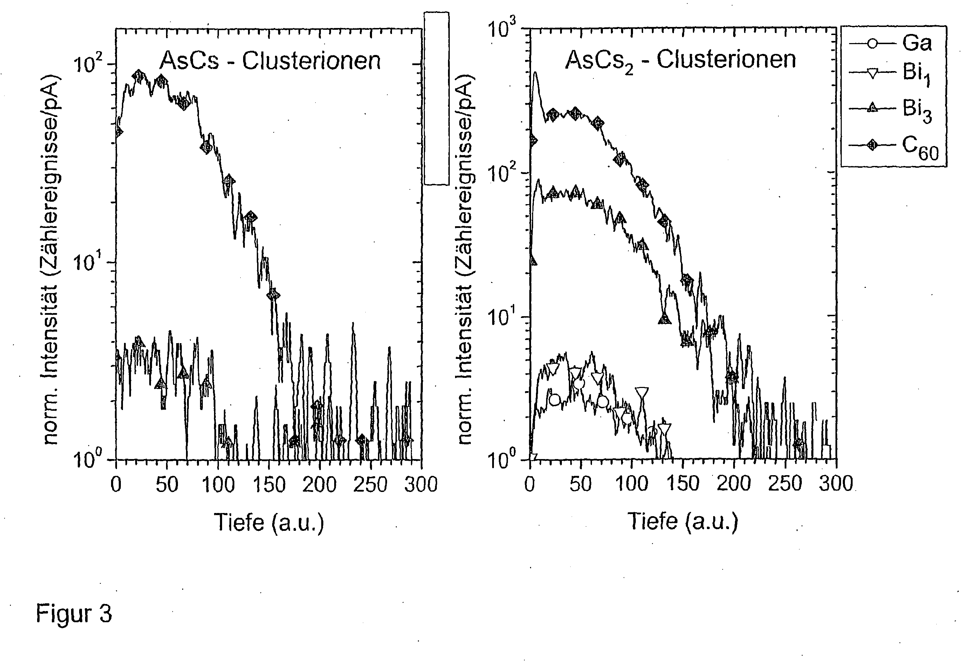

Figur 3 zeigt das Ergebnis einer Analyse einer Siliziumprobe, in die Arsen implantiert wurde. Eine quantitative Analyse einer solchen Arsen-Tiefenverteilung ist für die Halbleiterindustrie von großer Bedeutung. Für die Messung wurde ein Flugzeitmassenspektrometer TOF.SIMS 5 der ION-TOF GmbH im Zweistrahlverfahren verwendet. Der Probenabtrag und die Bedeckung der Oberfläche erfolgte jeweils mit einem Cäsiumionenstrahl mit einer Energie von 500 eV auf einer Fläche von 300 x 300 µm². Während dieses Abtrags wurde die Oberfläche jeweils im Zentrum des Sputterkraters mit Ga⁺, Bi₁⁺, Bi₃⁺ Primärionen bei einer Energie von 25 keV und C₆₀⁺ Primärionen bei einer Energie von 10 keV analysiert und die Intensität der AsCs⁺-Clusterionen (linke Teilfigur) und AsCs₂⁺ Clusterionen (rechte Teilfigur) für verschiedene Tiefen bestimmt. Um jeweils auf eine identische Anzahl von Primärionen der verschiedenen Spezies für jeden Messpunkt umzurechnen, wurde die gemessenen Intensität auf den Primärionenstrom in pA normiert. Bei Verwendung von Ga⁺ und Bi₁⁺ lassen sich keine AsCs⁺ Clusterionen nachweisen (kein Signal in der linken Teilfigur von Fig. 3 meß- und beobachtbar). Mit den Clusterionen Bi₃⁺ und insbesondere C₆₀⁺ lässt sich die Tiefenverteilung von Arsen durch die Messung der AsCs⁺-Clusterionen messen. Auch bei der Analyse von AsCs₂⁺ Clusterionen als Maß für die Tiefenverteilung der Konzentration von Arsen in der Probe wird eine deutliche Intensitätssteigerung von bis zu einem Faktor 100 beobachtet (man beachte auch hier wieder die logarithmische Skala der y-Achse).

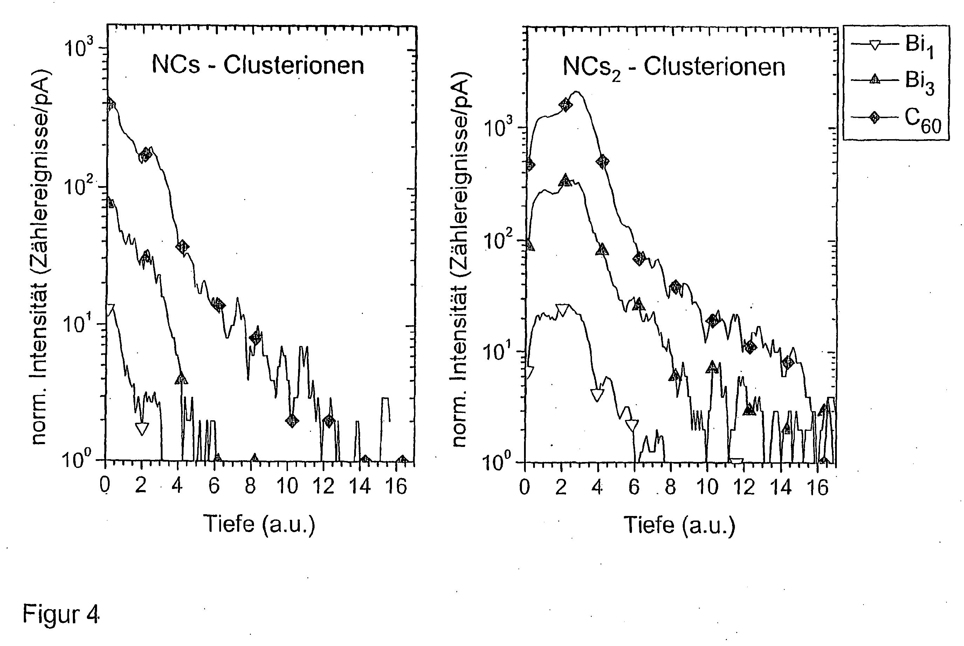

Figur 4 zeigt das Ergebnis einer Analyse einer Siliziumoxidprobe, in die eine geringe Konzentration von Stickstoff oberflächennah eingebracht wurde. Eine quantitative Analyse einer solchen Stickstoff-Tiefenverteilung ist für die Halbleiterindustrie von großer Bedeutung. Für die Messung wurde ein Flugzeitmassenspektrometer TOF.SIMS 5 der ION-TOF GmbH im Zweistrahlverfahren verwendet. Der Probenabtrag und die Bedeckung der Oberfläche erfolgte jeweils mit einem Cäsiumionenstrahl mit einer Energie von 500 eV auf einer Fläche von 300 x 300 µm². Während dieses Abtrags wurde die Oberfläche jeweils im Zentrum des Sputterkraters mit Bi₁⁺ und Bi₃⁺ Primärionen bei einer Energie von 25 keV und C₆₀⁺ Primärionen bei einer Energie von 10 keV analysiert und die Intensität der NCs⁺-Clusterionen (linkes Teilbild) und NCs₂⁺-Clüsterionen (rechtes Teilbild) für die verschiedenen Tiefen bestimmt. Um jeweils auf eine identische Anzahl von Primärionen der verschiedenen Spezies für jeden Messpunkt umzurechnen, wurde die gemessenen Intensität auf den Primärionenstrom in pA normiert. Mit den Clusterionen Bi₃⁺ und insbesondere C₆₀ lässt sich eine deutliche Intensitätssteigerung um einen Faktor 10 und mehr (logarithmische Skala!) für die NCs⁺-Clusterionen und NCs₂⁺-Clusterionen erreichen.

## Patentansprüche

1. Verfahren zur Analyse einer Festkörperprobe mittels Sekundärionen-Massenspektroskopie, wobei die Oberfläche der zu analysierenden Probe mit einem Analysestrahl bestrahlt wird und
die Oberfläche mit Caesium zumindest teilweise und/oder bereichsweise bedeckt wird, **dadurch gekennzeichnet, dass** die Oberfläche mit einem Analysestrahl, der überwiegend oder ausschließlich polyatomare Ionen mit mindestens drei Atomen je Ion enthält, bestrahlt wird, und
dass die erzeugten Sekundärionen auf Caesiumverbindungen analysiert werden.

2. Verfahren nach einem der vorhergehenden Ansprüche, **dadurch gekennzeichnet, dass** der Analysestrahl durch eine Flüssigmetallionenquelle erzeugt wird.

3. Verfahren nach einem der vorhergehenden Ansprüche, **dadurch gekennzeichnet, dass** der Analysestrahl ein- oder zweiwertige Biₙ- oder Auₙ-Ionen, n ≥ 3 und natürliche Zahl, insbesondere Bi₃⁺ oder Bi₃²⁺, SF₅⁺, und/oder C60-Ionen enthält oder daraus besteht.

4. Verfahren nach einem der vorhergehenden Ansprüche, **dadurch gekennzeichnet, dass** die Oberfläche der zu analysierenden Probe mit Caesium zumindest teilweise und/oder bereichsweise bedeckt wird, indem die Oberfläche mit einem Sputterstrahl, der überwiegend oder ausschließlich Caesium enthält, bestrahlt wird.

5. Verfahren nach dem vorhergehenden Anspruch, **dadurch gekennzeichnet, dass** die Oberfläche mit dem Sputterstrahl vor, während oder intermittierend mit dem Analysestrahl bestrahlt wird.

6. Verfahren nach einem der vorhergehenden Ansprüche, **dadurch gekennzeichnet, dass** die Oberfläche der zu analysierenden Probe mit Caesium zumindest teilweise und/oder bereichsweise bedeckt wird, indem Caesium auf die Oberfläche aufgedampft wird.

7. Verfahren nach dem vorhergehenden Anspruch, **dadurch gekennzeichnet, dass** Caesium auf die Oberfläche vor, während oder intermittierend mit der Bestrahlung durch den Analysestrahl aufgedampft wird.

8. Verfahren nach einem der vorhergehenden Ansprüche, **dadurch gekennzeichnet, dass** die Analyse der erzeugten Sekundärionen in einem Magnetischen Sektorfeld-, einem Quadrupol- und/oder einem Flugzeit-Massenspektrometer erfolgt.

9. Verfahren nach einem der vorhergehenden Ansprüche, **dadurch gekennzeichnet, dass** ein massenspektrometrisches Bild der Probenoberfläche und/oder ein Tiefenprofil der Probenoberfläche erfasst wird.

## Claims

1. Method of analysing a solid specimen by means of secondary ion mass spectroscopy, wherein the surface of the specimen to be analysed is irradiated with an analysing beam and the surface is covered with caesium at least partly and/or in certain regions, **characterized in that** the surface is irradiated with an analysing beam which predominantly or exclusively contains polyatomic ions with at least 3 atoms per ion, and **in that** the secondary ions produced are analysed for caesium compounds.

2. Method according to one of the preceding claims, **characterized in that** the analysing beam is generated by a liquid metal ion source.

3. Method according to one of the preceding claims, **characterized in that** the analysing beam contains or consists of mono- or divalent Biₙ or Auₙ ions, n is ≥ 3 and is a natural number, in particular Bi₃⁺ or Bi₃²⁺, SF₅⁺; and/or C60 ions.

4. Method according to one of the preceding claims, **characterized in that** the surface of the specimen to be analysed is covered with caesium at least partly and/or in certain regions by irradiation of the surface with a sputter beam which predominantly or exclusively contains caesium.

5. Method according to the preceding claim, **characterized in that** the surface is irradiated with the sputter beam before, during or intermittently with the analysing beam.

6. Method according to one of the preceding claims, **characterized in that** the surface of the specimen to be analysed is covered with caesium at least partly and/or in certain regions by vapour deposition of caesium on to the surface.

7. Method according to the preceding claim, **characterized in that** the vapour deposition of caesium on to the surface is carried out before, during or intermittently with the irradiation by the analysing beam.

8. Method according to one of the preceding claims, **characterized in that** the analysis of the secondary ions produced is carried out in a magnetic sector field, a quadrupole and/or a time-of-flight mass spectrometer.

9. Method according to one of the preceding claims, **characterized in that** a mass spectrometry image of the specimen surface and/or a depth profile of the specimen surface is recorded.

## Revendications

1. Procédé d'analyse d'un échantillon de solide par spectroscopie de masse à ions secondaires, dans lequel la surface de l'échantillon à analyser est exposée à un rayon d'analyse et la surface est recouverte de césium au moins en partie et/ou par segments,
**caractérisé en ce que** la surface est exposée à un rayon d'analyse qui contient principalement ou exclusivement des ions polyatomiques avec au moins trois atomes par ion, et
**en ce que** les ions secondaires générés sont analysés sur des composés de césium.

2. Procédé selon l'une quelconque des revendications précédentes, **caractérisé en ce que** le rayon d'analyse est généré par une source d'ions métalliques liquides.

3. Procédé selon l'une quelconque des revendications précédentes, **caractérisé en ce que** le rayon d'analyse contient ou est constitué d'ions Biₙ ou Auₙ mono- ou divalents, n étant un entier naturel ≥ 3, en particulier des ions Bi₃⁺, ou Bi₃²⁺, SF₅⁺, et/ou des ions C60.

4. Procédé selon l'une quelconque des revendications précédentes, **caractérisé en ce que** l'on revêt de césium la surface de l'échantillon à analyser, au moins en partie et/ou par segments, en exposant la surface à un rayon de pulvérisation contenant principalement ou exclusivement du césium.

5. Procédé selon la revendication précédente, **caractérisé en ce que** la surface est exposée à un rayon de pulvérisation avant ou pendant le rayon d'analyse ou par intermittence avec celui-ci.

6. Procédé selon l'une quelconque des revendications précédentes, **caractérisé en ce que** l'on revêt de césium la surface de l'échantillon à analyser, au moins en partie et/ou par segments, en vaporisant du césium sur la surface.

7. Procédé selon la revendication précédente, **caractérisé en ce que** le césium est vaporisé sur la surface avant ou pendant l'exposition au rayon d'analyse, ou par intermittence avec celui-ci.

8. Procédé selon l'une quelconque des revendications précédentes, **caractérisé en ce que** l'analyse des ions secondaires générés s'effectue dans un spectromètre de masse à champ magnétique sectoriel, quadripolaire et/ou à temps de vol.

9. Procédé selon l'une quelconque des revendications précédentes, **caractérisé en ce que** l'on enregistre une image en spectrométrie de masse de la surface de l'échantillon et/ou un profil en profondeur de la surface de l'échantillon.
